(19) Europäisches Patentamt / European Patent Office / Office européen des brevets

(11) **EP 3 035 339 B1**

(12) **EUROPEAN PATENT SPECIFICATION**

(45) Date of publication and mention
of the grant of the patent:
**13.12.2017 Bulletin 2017/50**

(51) Int Cl.:
***G21D 3/00*** *(2006.01)*     *G06N 3/02* *(2006.01)*

(21) Application number: **15182971.0**

(22) Date of filing: **28.08.2015**

(54) **METHOD OF SYNTHESIZING AXIAL POWER DISTRIBUTIONS OF NUCLEAR REACTOR CORE USING NEURAL NETWORK CIRCUIT AND IN-CORE PROTECTION SYSTEM (ICOPS) USING THE SAME**

VERFAHREN ZUR HERSTELLUNG DER AXIALEN LEISTUNGSVERTEILUNG DES KERNS VON KERNREAKTOREN UNTER VERWENDUNG EINER NEURONALEN NETZWERKSCHALTUNG UND IN-CORE-SCHUTZSYSTEM (ICOPS) DAMIT

PROCÉDÉ DE SYNTHÈSE DE DISTRIBUTIONS D'ÉNERGIE AXIALE D'UN NOYAU DE RÉACTEUR NUCLÉAIRE UTILISANT UN CIRCUIT DE RÉSEAU NEURONAL ET SYSTÈME DE PROTECTION IN-CORE (ICOPS) UTILISANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014 KR 20140184557**

(43) Date of publication of application:
**22.06.2016 Bulletin 2016/25**

(73) Proprietor: **Kepco Nuclear Fuel Co., Ltd**
**Daejeon 34057 (KR)**

(72) Inventors:
• **Park, Young Ho**
**35297 Daejeon (KR)**
• **Kim, Young Baek**
**34198 Daejeon (KR)**
• **Kim, Dong Soo**
**Yuseong-gu, Daejeon 34057 (KR)**
• **Oh, Do Young**
**34046 Daejeon (KR)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**JP-A- H07 260 985**     **KR-B1- 800 001 625**

• **Kim, Cha & Lee: "Axial Power Distribution Calcultion Using a Neural Network in the Nulear Reactor Core", Proceedings of the Korean Nuclear Society Autumn Meeting, 1 October 1997 (1997-10-01), pages 58-63, XP055266328, Taegu, Korea Retrieved from the Internet: URL:http://www.osti.gov/etde/servlets/purl /324084-tqe2VL/webviewable/324084.pdf [retrieved on 2016-04-18]**

EP 3 035 339 B1

**Description**

**BACKGROUND OF THE INVENTION**

1. Field of Invention

The present invention relates to a method of synthesizing axial power distributions of a nuclear reactor core using a neural network circuit according to the preamble of claim 1 which is known from "Axial Power Distribution Calculation Using a Neural Network in the Nuclear Reactor Core", October 1997 (1997-10-01), pages 58-63, XP055266328, Retrieved from the internet: URL:http://www.osti.gov/etde/servlets/purl/324084-tqe2VL/webviewable/324084.pdf and an in-core protection system (ICOPS) using the same. More particularly, the present invention relates to a method of synthesizing axial power distributions of a nuclear reactor core using a neural network circuit and an ICOPS using the same, in which using the neural network circuit including an input layer, an output layer, and at least one hidden layer, each layer being configured with at least one node, each node of one layer being connected to nodes of the other layers, node-to-node connections being made with connection weights varied based on a learning result, optimum connection weights between the respective nodes constituting the neural network circuit are determined through learning based on various core design data applied to the design of a nuclear reactor core of a nuclear power plant, and axial power distributions of the nuclear reactor core are synthesized based on ex-core flux detector signals measured by ex-core neutron flux detectors during operation of a nuclear reactor, so that the initial time required to perform a start-up test of the nuclear reactor can be reduced since basic data for synthesizing axial power distributions need not be separately measured in the start-up test of the nuclear reactor contrary to a conventional ICOPS, thereby improving the economic efficiency of the nuclear power plant, and so that overall nuclear reactor core design data can be used rather than actual measurement data in the start-up test (i.e., at the beginning of a period of nuclear fuel), thereby more accurately replicating axial power distributions of the nuclear reactor core throughout the overall period of the nuclear fuel.

2. Description of the Prior Art

A core protection calculator system (CPCS) of a nuclear power plant is an essential nuclear reactor protection system for safely keeping a nuclear reactor from a nuclear fuel meltdown and a departure from nucleate boiling (DNB.) The CPCS is a system in which safety and reliability are absolutely required.

Accordingly, in order to safely keep the nuclear reactor, it is very important to monitor and check, in real time, a state of the nuclear reactor. Hence, it is requested to satisfy the strict conditions from a design process. Particularly, in order to monitor, in real time, axial power distributions of the nuclear reactor core, a plurality of ex-core neutron flux detectors provided along the circumference of the periphery of the nuclear reactor are respectively disposed at three levels (top, middle, and bottom portions) along the axial direction of the core, so that axial power distributions of the nuclear reactor core are synthesized based on ex-core flux detector signals at the three levels measured by the ex-core neutron flux detectors.

As such, a conventional in-core protection system (ICOPS), as disclosed in Korean Patent No. 10-0009517, entitled "METHOD & APPARATUS FOR MONITORING THE AXIAL POWER DISTRIBUTION WITHIN THE CORE OF A NUCLEAR REACTOR EXTERIOR OF THE REACTOR" (Westinghouse Electric Corporation), registered on March 23, 1981, is configured to calculate core-periphery powers at three levels (top, middle, and bottom portions), using ex-core flux detector signals measured by ex-core neutron flux detectors at the periphery of a nuclear reactor, calculate average core-periphery powers at the three levels by reflecting rod shadowing factors (RSFs) based on the calculated core-periphery outputs, and then synthesize 20 axial power distributions using a cubic spline interpolation, based on the calculated average core-periphery powers.

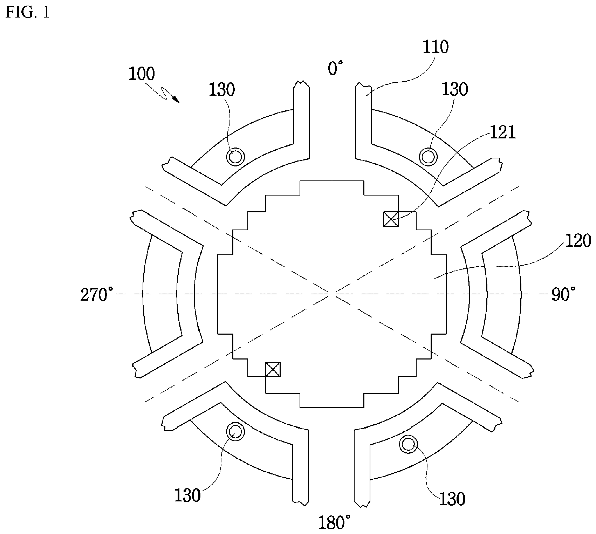

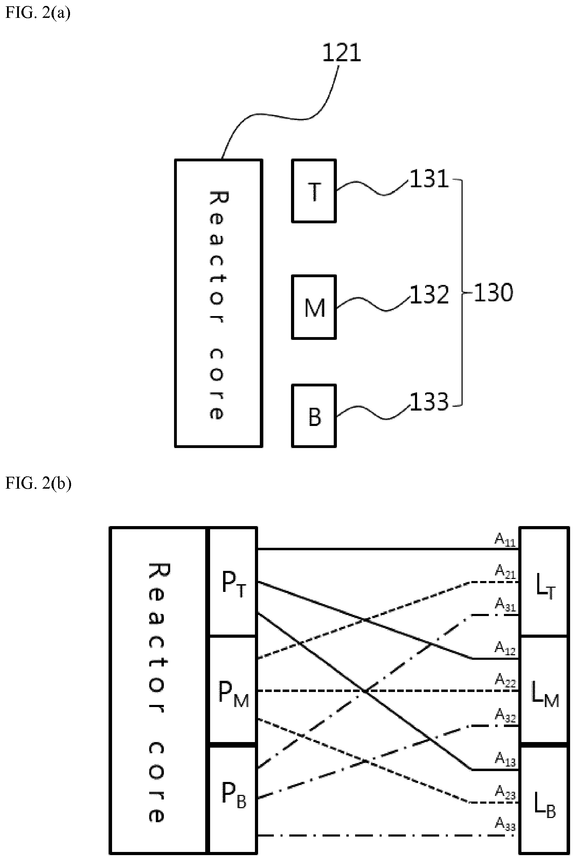

That is, in the conventional art disclosed in Korean Patent No. 10-0009517, a plurality of ex-core neutron flux detectors 130 provided along the circumference of the periphery of the nuclear reactor as shown in FIG. 1 are respectively disposed at the three levels (top, middle, and bottom portions) equidistantly disposed along the axial height of the nuclear reactor core as shown in FIGS. 2(a) and 2(b), so that core-periphery powers $P_T$, $P_M$, and $P_B$ at the three levels are calculated based on ex-core flux detector signals $L_T$, $L_M$, and $L_B$ measured by the ex-core neutron flux detectors 131, 132, and 133.

Here, the ex-core neutron flux detectors 131, 132, and 133 disposed at the respective levels are spaced apart from the nuclear reactor core at a regular distance, to detect, as shown in FIG. 2(b), not only neutrons radiated from a corresponding level of the nuclear reactor core but also neutrons radiated from the other levels of the nuclear reactor core. Therefore, the calculated core-periphery power at the corresponding level is different from an actual core-periphery power at the corresponding level. In order to solve this, the core-periphery powers $P_T$, $P_M$, and $P_B$ at the respective levels are calculated through a shape annealing matrix (SAM) including constants $A_{ij}$ which define a relationship between the ex-core flux detector signals $L_T$, $L_M$, and $L_B$ and the core-periphery powers $P_T$, $P_M$, and $P_B$ as shown in the following

Equation 1.

$$\begin{bmatrix} P_T \\ P_M \\ P_B \end{bmatrix} = \begin{pmatrix} A_{11} & A_{12} & A_{13} \\ A_{21} & A_{22} & A_{23} \\ A_{31} & A_{32} & A_{33} \end{pmatrix} \times \begin{bmatrix} L_T \\ L_M \\ L_B \end{bmatrix}$$

Here, $P_T$, $P_M$, and $P_B$ are core-periphery powers at top, middle, and bottom portions of the nuclear reactor core, respectively, $L_T$, $L_M$, and $L_B$ are ex-core flux detector signals detected by the ex-core neutron flux detectors disposed at the three levels, i.e., the top, middle, and bottom portions of the periphery of the nuclear reactor, respectively, and $A_{ij}$ is a constant which defines a relationship between the ex-core flux detector signals and the core-periphery powers.

As a result, the constants ($A_{ij}$) of the SAM are required so as to obtain the core-periphery powers $P_T$, $P_M$, and $P_B$. To this end, in the conventional art, the SAM is determined based on data acquired in a start-up test of the nuclear reactor (i.e., at the beginning of the nuclear fuel period), which is performed at the beginning of every plant operating period. In this case, the core-periphery powers $P_T$, $P_M$, and $P_B$ calculated based on the ex-core flux detector signals $L_T$, $L_M$, and $L_B$ are compared with the actual core-periphery powers measured by in-core neutron flux detectors (not shown) while the power of the nuclear reactor increases up to 30% to 80%, and the SAM is determined such that the differences between the calculated core-periphery powers and the actual core-periphery powers are minimized.

As such, core-periphery powers of the nuclear reactor core during one plant period are calculated using a SAM determined based on data acquired at the beginning of the period, and average core-periphery powers for the respective nodes are calculated through a correction process such as reflecting RSFs to the calculated core-periphery powers. Then, axial power distributions are synthesized based on the calculated average core-periphery powers for the respective nodes, so that axial power distributions having the same level as the actual core-periphery powers can be continuously synthesized in real time.

However, in the conventional art described above, the SAM was determined based on data acquired at the beginning of a period, and hence a change in power depending on changes in composition and state of nuclear fuel in the nuclear reactor core at the end of the period cannot be properly reflected. Therefore, an error in synthesizing axial power distributions would increase at the end of the period. Further, since the SAM should be newly determined at the beginning of every period, the time required to perform a start-up test of the nuclear reactor increases. For this reason, the efficiency of the nuclear power plant is lowered.

## SUMMARY OF THE INVENTION

Accordingly, the present invention is conceived to solve the aforementioned problems in the prior art. An object of the present invention is to provide a method of synthesizing axial power distributions of a nuclear reactor core using a neural network circuit and an in-core protection system (ICOPS) using the same, in which using the neural network circuit including an input layer, an output layer, and at least one hidden layer, each layer being configured with at least one node, each node of one layer being connected to nodes of the other layers, node-to-node connections being made with connection weights varied based on a learning result, optimum connection weights between the respective nodes constituting the neural network circuit are determined through learning based on various core design data applied to the design of a nuclear reactor core of a nuclear power plant, and axial power distributions of the nuclear reactor core are synthesized based on ex-core flux detector signals measured by ex-core neutron flux detectors during operation of a nuclear reactor, so that the initial time required to perform a start-up test of the nuclear reactor can be reduced since basic data for synthesizing axial power distributions need not be separately measured in the start-up test of the nuclear reactor contrary to a conventional ICOPS, thereby improving the economic efficiency of the nuclear power plant, and so that overall nuclear reactor core design data can be used rather than actual measurement data in the start-up test (i.e., at the beginning of a period of nuclear fuel), thereby more accurately replicating axial power distributions of the nuclear reactor core throughout the overall period of the nuclear fuel.

According to of the present invention for achieving the objects, there is provided a method of synthesizing axial power distributions of a nuclear reactor core using a neural network circuit, as defined in independent claim 1.

## BRIEF DESCRIPTION OF THE DRAWINGS

The above and other objects, features and advantages of the present invention will become apparent from the following description of a preferred embodiment given in conjunction with the accompanying drawings, in which:

FIG. 1 is a view schematically illustrating relative positions of ex-core neutron flux detectors in a nuclear reactor;

FIG. 2(a) is a view schematically illustrating relative positions of the ex-core neutron flux detectors with respect to the axial direction of a nuclear reactor core in the nuclear reactor;

FIG. 2(b) is a view schematically illustrating a relationship between core-periphery powers and ex-core flux detector signals in the nuclear reactor;

FIG. 3 is a flowchart illustrating a method of synthesizing axial power distributions according to an embodiment of the present invention;

FIG. 4 is a view illustrating a configuration of a neural network circuit for synthesizing axial power distributions according to the embodiment of the present invention;

FIG. 5 is a flowchart illustrating a learning process of the neural network circuit through a back-propagation (BP) algorithm according to the embodiment of the present invention; and

FIG. 6 is a graph illustrating an example in which an error converges on a local or global minimum value through the BP algorithm based on an initial connection weight in the learning of the neural network circuit through the BP algorithm according to the present invention.

## DETAILED DESCRIPTION OF THE EXEMPLARY EMBODIMENTS

Hereinafter, exemplary embodiments of the present invention will be described in detail with reference to the accompanying drawings. Throughout the drawings, like reference numerals are used to designate like elements.

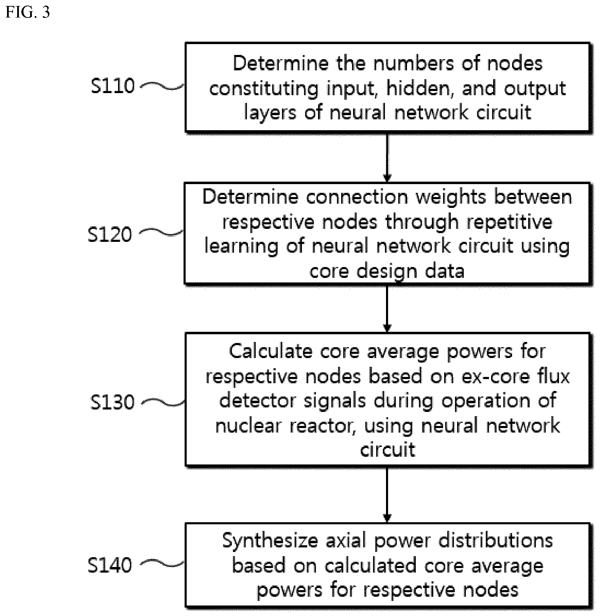

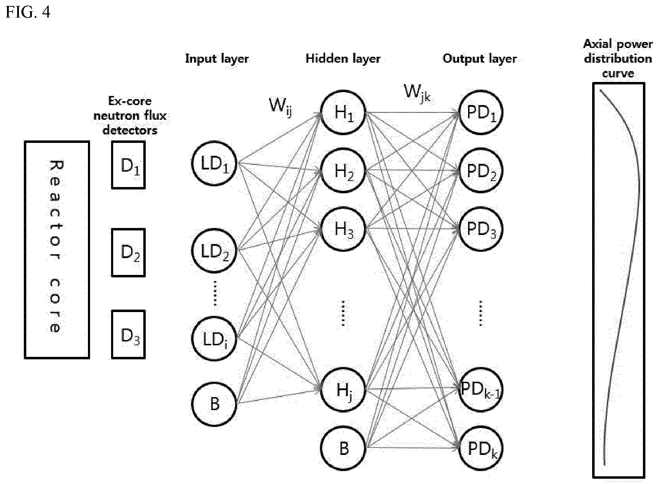

FIG. 3 is a flowchart illustrating a method of synthesizing axial power distributions according to an embodiment of the present invention. FIG. 4 is a view illustrating a configuration of a neural network circuit for synthesizing axial power distributions according to the embodiment of the present invention.

Referring to FIGS. 3 and 4, there are provided a method of synthesizing axial power distributions of a nuclear reactor core using a neural network circuit and an in-core protection system (ICOPS) using the same according to an embodiment of the present invention, in which, in a neural network circuit including an input layer, an output layer, and at least one hidden layer, the method is configured to determine the number of nodes $LD_i$ constituting the input layer, the number of nodes $H_j$ constituting the hidden layer, and the number of nodes $PD_k$ constituting the output layer (S110), allow the neural network to learn through a back-propagation (BP) algorithm and a simulated annealing (SA) method by inputting various core design data applied to the design of the nuclear reactor core, to optimize the neural network by determining optimum connection weights (i.e., weight values $W_{ij}$, and $W_{jk}$) among the respective nodes $LD_i$, $H_j$, and $PD_k$ (S120), calculate previously set core average powers for the respective nodes based on ex-core flux detector signals measured by ex-core neutron flux detectors $D_1$, $D_2$, and $D_3$ during operation of the nuclear reactor, using the optimized neural network (S130), and then synthesize, in real time, axial power distributions of the core based on the calculated core average powers for the respective nodes (S140).

In other words, a method of synthesizing axial power distributions of a nuclear reactor core using a neural network circuit and an ICOPS using the same according to the present invention have advantages in that using the neural network circuit including an input layer, an output layer, and at least one hidden layer, each layer being configured with at least one node, each node of one layer being connected to nodes of the other layers, node-to-node connections being made with connection weights varied based on a learning result, optimum connection weights between the respective nodes constituting the neural network circuit are determined through learning based on various core design data applied to the design of a nuclear reactor core of a nuclear power plant, and axial power distributions of the nuclear reactor core are synthesized based on ex-core flux detector signals measured by ex-core neutron flux detectors during operation of a nuclear reactor, so that the initial time required to perform a start-up test of the nuclear reactor can be reduced since basic data for synthesizing axial power distributions need not be separately measured in the start-up test of the nuclear reactor contrary to a conventional ICOPS, thereby improving the economic efficiency of the nuclear power plant, and so that overall nuclear reactor core design data can be used rather than actual measurement data in the start-up test (i.e., at the beginning of a period of nuclear fuel), thereby more accurately replicating axial power distributions of the nuclear reactor core throughout the overall period of the nuclear fuel.

Hereinafter, a method of synthesizing axial power distributions of a nuclear reactor core using a neural network circuit and an ICOPS using the same according to the present invention will be described in detail for each step based on the flowchart of FIG. 3 with reference to FIGS. 1, 2(a), 2(b), 4, and 5.

FIG. 1 is a view schematically illustrating relative positions of ex-core neutron flux detectors in a nuclear reactor. FIG. 2(a) is a view schematically illustrating relative positions of the ex-core neutron flux detectors with respect to the axial direction of the nuclear reactor core in the nuclear reactor. FIG. 2(b) is a view schematically illustrating a relationship between core-periphery powers and ex-core flux detector signals in the nuclear reactor.

The ICOPS according to the present invention is configured such that a plurality of ex-core neutron flux detectors 130 (*see* FIG. 1) provided along the circumference of the periphery of the nuclear reactor are respectively disposed at three levels (top, middle, and bottom portions) equidistantly disposed along the axial direction of the core (*see* Fig. 2(a)), so that axial power distributions of the nuclear reactor core are synthesized based on ex-core flux detector signals at the three levels measured by the ex-core neutron flux detectors 131, 132, and 133 disposed at the three levels, as described above.

In this case, the ex-core neutron flux detectors 131, 132, and 133 disposed at the respective levels are spaced apart at from the nuclear reactor core a regular distance, to detect not only neutrons radiated from a corresponding level of the nuclear reactor core but also neutrons radiated from the other levels of the nuclear reactor core. Therefore, the calculated core-periphery power at the corresponding level is different from an actual core-periphery power at the corresponding level.

In order to solve this, in the present invention, using a neural network circuit configured to include an input layer, an output layer, and at least one hidden layer, each layer being configured with at least one node, each node of one layer being connected to nodes of the other layers, node-to-node connections being made with connection weights varied based on a learning result, core average powers for the respective nodes are calculated based on ex-core flux detector signals measured by the ex-core neutron flux detectors 131, 132, and 133, thereby synthesizing axial power distributions of the core.

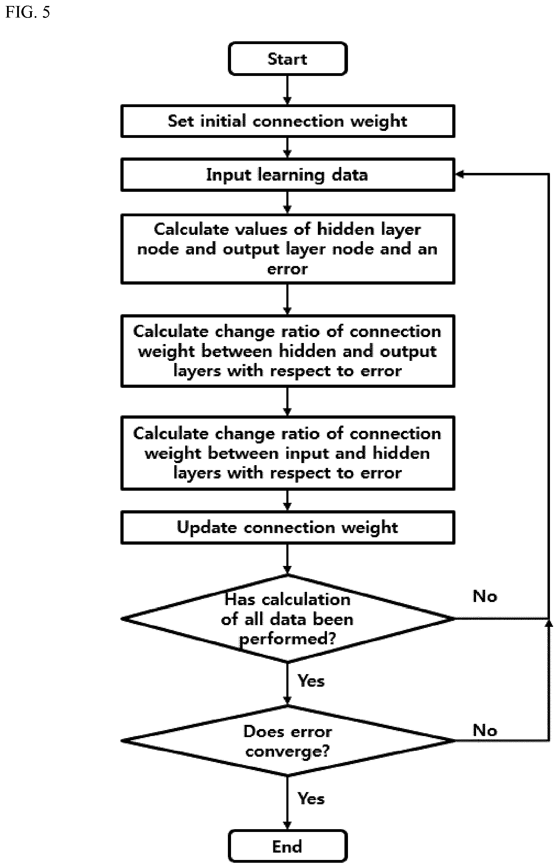

FIG. 3 is a flowchart illustrating a method of synthesizing axial power distributions according to an embodiment of the present invention. FIG. 4 is a view illustrating a configuration of a neural network circuit for synthesizing axial power distributions according to the embodiment of the present invention. FIG. 5 is a flowchart illustrating a learning process of the neural network circuit through a BP algorithm according to an embodiment of the present invention.

As shown in FIG. 4, the neural network circuit applied to the synthesization of axial power distributions of the nuclear reactor core according to the present invention includes an input layer, an output layer, and at least one hidden layer. The input, hidden, and output layers constituting the neural network circuit are configured with a plurality of nodes $LD_i$, a plurality of nodes $H_j$, and a plurality of nodes $PD_k$, respectively.

In this case, in order to synthesize axial power distributions through learning of the neural network, it is required to determine the number of nodes $LD_i$, the number of nodes $H_j$, and the number of nodes $PD_k$ (S110). The numbers of the input and output layer nodes $LD_i$, and $PD_k$ are naturally determined according to the number of ex-core neutron flux detectors and the number of core average power nodes to be sought so as to synthesize axial power distributions of the core. However, the number of hidden layer nodes $H_j$ is determined through user's experiences and repetitive experiments. As the number of hidden layer nodes $H_j$ increases, the difference between a core average power of the output layer and an actual core average power decreases. However, the processing speed decreases, and therefore, it is required to optimize the number of nodes $H_j$ of the hidden layer.

That is, the input layer is a layer which receives, as input values, three ex-core flux detector signals measured by ex-core neutron flux detectors ($D_1$, $D_2$, and $D_3$ of FIG. 3). The input layer is configured with three input layer nodes $LD_1$, $LD_2$, and $LD_3$. The output layer is a layer which outputs a core average power node value for synthesizing axial power distributions of the core. The output layer may be configured with 15 to 25 output layer nodes $PD_k$ as axial power distributions are synthesized through 15 to 25 core average output node values in a general ICOPS. In this embodiment, the output layer is configured with 20 output layer nodes $PD_1$ to $PD_{20}$.

The hidden layer is a layer which connects the hidden layer and the input layer to each other between the two layers, and at least one hidden layer may be added between the input layer and the output layer. In the present invention, one hidden layer is used. In the case of the hidden layer node $H_j$, it is appropriate as the result of repetitive experiments that the number of hidden layer nodes is set to 10 to 20. In this embodiment, the hidden layer is configured with 15 hidden layer nodes $H_1$ to $H_{15}$.

Here, the input layer and the hidden layer may be configured to additionally include one bias node B having a bias value when necessary. The numbers of the input, hidden, and output layer nodes $LD_i$, $H_j$, and $PD_k$ are not limited to those proposed in this embodiment. It will be apparent that the numbers of the input, hidden, and output nodes $LD_i$, $H_j$, and $PD_k$ may be properly selected and used according to the structure of the nuclear reactor or the processing speed of a neural network circuit system and the accuracy of a power value to be sought.

If the numbers of the input, hidden, and output layer nodes $LD_i$, $H_j$, and $PD_k$ are determined, the neural network circuit is learned using various core design data (i.e., all data at the beginning, middle, and end of a period of loaded nuclear fuel) applied to the design of the nuclear reactor core of the nuclear power plant, thereby determining optimum connection weights between the respective nodes (S120).

In this case, a BP algorithm is used for learning of the neural network circuit. The BP algorithm, as shown in FIG. 5, determines the optimum connection weights $W_{ij}$ and $W_{jk}$ between the respective nodes through a series of processes.

First, arbitrary numbers randomly selected in an arbitrary section (in this embodiment, it is set to select arbitrary numbers in section [-2, 2]) are set to initial connection weights $W_{ij}$ and $W_{jk}$. A value of the hidden layer node $H_j$ is calculated using, as input values of the input layer node $LD_i$, the set initial connection weight $W_{ij}$ between the input layer and the hidden layer and an ex-core flux detector signal detected by the ex-core neutron flux detector, which is included in the design data. A value of the output layer node $PD_k$ is calculated based on the calculated value of the hidden layer

node $H_j$ and the initial connection weight $W_{jk}$ between the hidden layer and the output layer.

The value of the output layer node $PD_k$ calculated as described above is compared with a true value for each node (here, an actual core average power based on a corresponding ex-core flux detector signal, which is included in the design data), thereby calculating an error.

Next, in order to update the respective connection weights $W_{ij}$ and $W_{jk}$ such that the calculated error can be minimized, the calculated error is partially differentiated using the connection weight $W_{jk}$ between the hidden layer and the output layer, thereby calculating a change ratio of the connection weight $W_{jk}$ between the hidden layer and the output layer with respect to the error. Also, the error is partially differentiated using the connection weight $W_{ij}$ between the input layer and the hidden layer, thereby calculating a change ratio of the connection weight $W_{ij}$ between the input layer and the hidden layer with respect to the error.

Thereafter, the connection weight $W_{jk}$ between the hidden layer and the output layer and the connection weight $W_{ij}$ between the input layer and the hidden layer are updated in the opposite direction of a change ratio having influence on the error, based on the respective calculated change ratios of the connection weights, and the above-described process is repeatedly performed on a set of various design data (i.e., ex-core flux detector signals and core average power data corresponding thereto) applied to the design of the nuclear reactor core, thereby calculating a performance index of a learning result value from a difference between a core average power value obtained from the neural network circuit and an actual core average power value shown in the design data. When the calculated performance index is equal to or smaller than a previously set measurement limit value, the BP algorithm is considered to converge, and the learning using the BP algorithm is finished, thereby optimizing the connection weights $W_{ij}$ and $W_{jk}$ among the respective nodes $LD_i$, $H_j$, and $PD_k$.

Here, the hidden layer node and the output layer node except for the bias node and the input layer node have a differentiable active function (generally, a sigmoid or hyperbolic tangent function is frequently used) for the purpose of learning, and values of the hidden layer node $H_j$ and the output layer node $PD_k$ are calculated by the following Equations 2 and 3. Accordingly, the performance index of the learning result value can be obtained from the following Equation 4.

Equation 2

$$H_j = a\left( \sum_{i=1}^{n} \left( W_{i,j} \times LD_i \right) + W_{n+1,j} \times B \right)$$

Here, $H_j$ is a value of a $j^{th}$ hidden layer node, n is the number of input layer nodes except for the bias node, $W_{i,j}$ is a connection weight (weight value) between an $i^{th}$ input layer node and the $j^{th}$ hidden layer node, $LD_i$ is a value of the $i^{th}$ input layer node, B is the bias node, and a(x) is an active function of the hidden layer node.

Equation 3

$$PD_k = a\left( \sum_{j=1}^{n} \left( W_{j,k} \times H_j \right) + W_{n+1,k} \times B \right)$$

Here, $PD_k$ is a value of a $k^{th}$ output layer node, n is the number of hidden layer nodes except for a bias node, $W_{j,k}$ is a connection weight (weight value) between the $j^{th}$ hidden layer node and the $k^{th}$ output layer node, $H_j$ is a value of the $j^{th}$ hidden layer node, B is the bias node, and a(x) is an active function of the output layer node.

Equation 4

$$\text{Performance Index} = \frac{1}{N} \sum_{i=1}^{N} \left\{ \frac{1}{L-M+1} \sum_{j=M}^{L} \frac{1}{2} \left( \frac{o_{ij} - t_j}{t_j} \right)^2 \right\}$$

Here, L and M are node numbers used in error calculation, where the calculation is being performed from $M^{th}$ node to $L^{th}$ node, $o_{ij}$ is a calculation result value of the neural network circuit at a $j^{th}$ node at $i^{th}$ test case, $t_j$ is a true value at the $j^{th}$ node, and N is the number of test cases used in learning.

It should be noted that in the learning of the neural network circuit through the BP algorithm described above, the error between the true value and the result value calculated through the neural network circuit does not converge on a global minimum value but converges on a local minimum value according to the arbitrarily selected initial connection weight, and therefore, an optimum connection weight where an actual error is minimized may not be found.

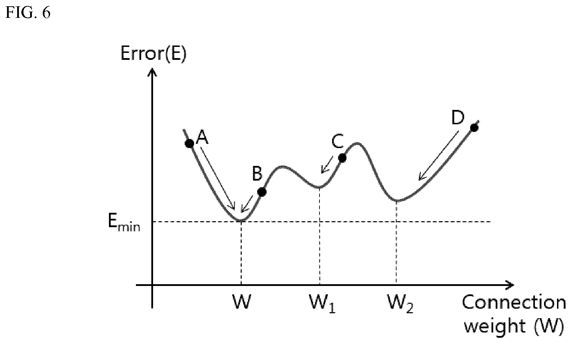

FIG. 6 is an illustrating example in which an error converges on a local or global minimum value through the BP algorithm based on an initial connection weight in the learning of the neural network circuit through the BP algorithm according to the present invention. As shown in FIG. 6, owing to characteristics of the BP algorithm, the error converges in the direction where the error decreases. Hence, when a connection weight at point A or B is set as the initial connection weight, the error converges in the direction where the error decreases, so that an optimum connection weight W where the error is the local minimum value can be found. However, there is a problem in that when a connection weight at point C or D is set as the initial connection weight, a connection weight $W_1$ or $W_2$ at a point where the error is the local minimum value is merely found, but the optimum connection weight W is not found.

In order to solve such a problem, in the present invention, an SA method is applied together with the BP algorithm in the learning of the neural network circuit for synthesizing axial power distributions, thereby more accurately synthesizing axial power distributions.

Here, the SA method, which is a probabilistic search algorithm which enables to search over the entire region of a solution space, is a technique technologically applying a process of finally stabilizing a metal into a crystal form having the minimum energy when the metal in a liquid state is cooled down through an annealing process. The SA method performs the global optimization by repeating a process of probabilistically determining a new solution from a current solution.

One of important features of the SA method is that it is possible to transfer the current solution to a solution having a cost function value inferior to the current solution. As shown in FIG. 6, although the optimum connection weight converges on the connection weight $W_1$ or $W_2$ where the error is the local minimum value, the SA method enables to search over the entire region out of the connection weight $W_1$ or $W_2$, so that the actual optimum connection weight W can be founded.

The SA method described above is a general probabilistic meta algorithm with respect to a global optimization issue. The SA method is a method applied in various fields so as to derive an optimum solution in a process of deriving a convergence value. In this specification, detailed description of the SA method will be omitted.

Subsequently, if the optimum connection weights $W_{ij}$ and $W_{jk}$ between the respective nodes are determined through the above-described process, core average powers for the respective nodes are calculated based on the ex-core flux detector signals measured by the ex-core neutron flux detectors $D_1$, $D_2$, and $D_3$ during the operation of the nuclear reactor, using the neural network circuit (S130), and axial power distributions of the nuclear reactor core are synthesized based on the calculated core average powers for the respective nodes (S140).

As described above, according to the present invention, using a neural network circuit configured to include an input layer, an output layer, and at least one hidden layer, each layer being configured with at least one node, each node of one layer being connected to nodes of the other layers, node-to-node connections being made with connection weights varied based on a learning result, optimum connection weights between the respective nodes constituting the neural network circuit are determined through learning based on various core design data applied to the design of a nuclear reactor core of a nuclear power plant, and axial power distributions of the nuclear reactor core are synthesized based on ex-core flux detector signals measured by ex-core neutron flux detectors during operation of a nuclear reactor, so that the initial time required to perform a start-up test of the nuclear reactor can be reduced since basic data for synthesizing axial power distributions need not be separately measured in the start-up test of the nuclear reactor contrary to a conventional ICOPS, thereby improving the economic efficiency of the nuclear power plant, and so that overall nuclear reactor core design data can be used rather than actual measurement data in the start-up test (i.e., at the beginning of a period of nuclear fuel), thereby more accurately replicating axial power distributions of the nuclear reactor core throughout the overall period of the nuclear fuel.

Further, in the present invention, axial core average powers of the nuclear reactor core can be directly calculated through the neural network circuit, based on ex-core flux detector signals measured by three ex-core neutron flux detectors, so that it is possible to more simply synthesize axial power distributions of the nuclear reactor core based on the ex-core flux detector signal, without calculating separate core-periphery powers.

The scope of the present invention is not limited to the embodiment described and illustrated above but is defined by the appended claims. It will be apparent that those skilled in the art can make various modifications and changes thereto within the scope of the invention defined by the claims. Therefore, the true scope of the present invention should be defined by of the appended claims.

**Claims**

1. A method of synthesizing axial power distributions of a nuclear reactor core using a neural network circuit, which is applied to an in-core protection system for controlling the operation of a nuclear reactor based on ex-core flux detector signals measured by ex-core neutron flux detectors, wherein the neural network circuit comprises an input layer configured to receive the ex-core flux detector signals measured by the ex-core neutron flux detectors; an output layer configured to output a core average power for each node calculated through the neural network circuit; and at least one hidden layer interposed between the input layer and the output layer to connect the two layers to each other,

wherein each of the input, output, and hidden layers is configured with at least one node, each node of one layer being connected to nodes of the other layers, node-to-node connections being made with connection weights varied based on a learning result, so that optimum connection weights between the respective nodes constituting the neural network circuit are determined through repetitive learning based core design data applied to the design of the nuclear reactor core of a nuclear power plant;

**characterized in that**

the neural network circuit determines optimum connection weights between the respective nodes through repetitive learning using a back-propagation (BP) algorithm and

the neural network circuit additionally performs a process of optimizing the connection weights obtained using the BP algorithm through a simulated annealing (SA) method.

2. The method according to Claim 1, wherein the input layer is configured with three input layer nodes which respectively receive three ex-core flux detector signals measured by ex-core neutron flux detectors disposed at three levels (top, middle, and bottom portions) equidistantly disposed along the axial height of the nuclear reactor core.

3. The method according to Claim 1, wherein the output layer is configured with 15 to 25 output layer nodes which output a core average power of the nuclear reactor.

4. The method according to Claim 1, wherein the hidden layer is configured with 10 to 20 hidden layer nodes which are interposed between the input and output layers to be connected to the respective nodes constituting the input and output layers.

5. The method according to Claim 4, wherein the hidden layer is configured with 15 hidden layer nodes.

6. The method according to Claim 1, wherein the input layer further comprises a bias node having a bias value.

7. The method according to Claim 1, wherein the hidden layer further comprises a bias node having a bias value.

8. An in-core protection system adapted to synthesize axial power distributions based on ex-core flux detector signals measured by ex-core neutron flux detectors of a nuclear reactor, through the method of Claim 1.

**Patentansprüche**

1. Verfahren zum Synthetisieren axialer Leistungsverteilungen eines Nuklearreaktorkerns unter Verwendung eines neuralen Netzwerkkreises, das auf ein kerninternes Schutzsystem angewendet wird, zum Steuern des Betriebes eines Kernreaktors auf der Basis kernexterner Flussdetektorsignale, die durch kernexterne Neutronenflussdetektoren gemessen werden, wobei der neurale Netzwerkkreis Folgendes umfasst: eine Eingangsschicht, die dafür ausgebildet ist, die durch die kernexternen Neutronenflussdetektoren gemessenen kernexternen Flussdetektorsignale zu empfangen; eine Ausgangsschicht, die dafür ausgebildet ist, eine durch den neuralen Netzwerkkreis berechnete Kerndurchschnittsleistung für jeden Knoten auszugeben; und mindestens eine verborgene Schicht, die zwischen der Eingangsschicht und der Ausgangsschicht angeordnet ist, um die zwei Schichten miteinander zu verbinden,

wobei jede der Eingangsschicht, der Ausgangsschicht und der verborgenen Schicht mit mindestens einem Knoten ausgebildet ist, wobei jeder Knoten einer einzelnen Schicht mit Knoten der anderen Schichten verbunden ist, wobei Knoten-zu-Knoten-Verbindungen hergestellt werden, während Verbindungsgewichte auf der Basis eines Lernergebnisses variiert werden, so dass optimale Verbindungsgewichte zwischen den jeweiligen Knoten, die den neuralen Netzwerkkreis bilden, durch auf wiederholtem Lernen basierende Kernkonstruktionsdaten bestimmt werden, die auf die Konstruktion des Nuklearreaktorkerns eines Kernkraftwerks angewendet werden;

**dadurch gekennzeichnet, dass**

der neurale Netzwerkkreis optimale Verbindungsgewichte zwischen den jeweiligen Knoten durch wiederholtes Lernen unter Verwendung eines Back-Propagation (BP)-Algorithmus bestimmt, und

der neurale Netzwerkkreis zusätzlich einen Prozess zum Optimieren der unter Verwendung des BP-Algorithmus erhaltenen Verbindungsgewichte durch ein Simulated Annealing (SA)-Verfahren ausführt.

2. Verfahren nach Anspruch 1, wobei die Eingangsschicht mit drei Eingangsschichtknoten ausgebildet ist, die jeweils drei kernexterne Flussdetektorsignale empfangen, die durch kernexterne Neutronenflussdetektoren gemessen werden, die auf drei Ebenen (oberer, mittlerer und unterer Abschnitt) angeordnet sind, die in gleichen Abständen entlang der axialen Höhe des Nuklearreaktorkerns angeordnet sind.

3. Verfahren nach Anspruch 1, wobei die Ausgangsschicht mit 15 bis 25 Ausgangsschichtknoten ausgebildet ist, die eine Kerndurchschnittsleistung des Kernreaktors ausgeben.

4. Verfahren nach Anspruch 1, wobei die verborgene Schicht mit 10 bis 20 verborgenen Schichtknoten ausgebildet ist, die zwischen den Eingangs- und Ausgangsschichten angeordnet sind, um mit den jeweiligen Knoten verbunden zu werden, welche die Eingangs- und Ausgangsschichten bilden.

5. Verfahren nach Anspruch 4, wobei die verborgene Schicht mit 15 verborgenen Schichtknoten ausgebildet ist.

6. Verfahren nach Anspruch 1, wobei die Eingangsschicht des Weiteren einen Vorspannknoten umfasst, der einen Vorspannwert aufweist.

7. Verfahren nach Anspruch 1, wobei die verborgene Schicht des Weiteren einen Vorspannknoten umfasst, der einen Vorspannwert aufweist.

8. Kerninternes Schutzsystem, das dafür ausgelegt ist, axiale Leistungsverteilungen auf der Basis kernexterner Flussdetektorsignale, die durch kernexterne Neutronenflussdetektoren eines Kernreaktors gemessen werden, durch das Verfahren nach Anspruch 1 zu synthetisieren.


**Revendications**

1. Procédé de synthèse de distributions axiales de puissance d'un coeur de réacteur nucléaire, à l'aide d'un circuit de type réseau neuronal qui est appliqué à un système de protection dans le coeur, destiné à régir le fonctionnement d'un réacteur nucléaire en fonction de signaux de détecteurs de flux hors du coeur, mesurés par des détecteurs de flux de neutrons hors du coeur, dans lequel le circuit de type réseau neuronal comprend une couche d'entrée conçue pour recevoir les signaux de détecteurs de flux hors du coeur, mesurés par les détecteurs de flux de neutrons hors du coeur ; une couche de sortie conçue pour délivrer une puissance moyenne du coeur pour chaque noeud, calculée au moyen du circuit de type réseau neuronal ; et au moins une couche cachée intercalée entre la couche d'entrée et la couche de sortie pour connecter les deux couches l'une à l'autre ; dans lequel chacune des couches d'entrée, de sortie et cachée est conçue avec au moins un noeud, chaque noeud d'une couche étant connecté à des noeuds des autres couches, des connexions noeud à noeud étant réalisées avec des poids de connexion variant sur la base d'un résultat d'apprentissage, de sorte que des poids de connexion optimaux entre les noeuds respectifs constituant le circuit de type réseau neuronal sont déterminés au moyen de données de conception de coeur sur la base d'un apprentissage répétitif, appliquées à la conception du coeur de réacteur nucléaire d'une centrale nucléaire ; **caractérisé en ce que** :

   le circuit de type circuit neuronal détermine des poids de connexion optimaux entre les noeuds respectifs au moyen d'un apprentissage répétitif faisant appel à un algorithme de rétropropagation (RP), et
   le circuit de type réseau neuronal exécute en outre un processus consistant à optimiser les poids de connexion obtenus à l'aide de l'algorithme de rétropropagation, au moyen d'une méthode de recuit simulé (RS).

2. Procédé selon la revendication 1, dans lequel la couche d'entrée est conçue avec trois noeuds de couche d'entrée qui reçoivent respectivement trois signaux de détecteurs de flux hors du coeur, mesurés par des détecteurs de flux de neutrons hors du coeur, disposés à trois niveaux (parties supérieure, médiane et inférieure) disposés de façon équidistante le long de la hauteur axiale du coeur de réacteur nucléaire.

3. Procédé selon la revendication 1, dans lequel la couche de sortie est conçue avec 15 à 25 noeuds de couche de sortie qui délivrent une puissance moyenne de coeur du réacteur nucléaire.

4. Procédé selon la revendication 1, dans lequel la couche cachée est conçue avec 10 à 20 noeuds de couche cachée qui sont intercalés entre les couches d'entrée et de sortie à connecter aux noeuds respectifs constituant les couches d'entrée et de sortie.

5. Procédé selon la revendication 4, dans lequel la couche cachée est conçue avec 15 noeuds de couche cachée.

6. Procédé selon la revendication 1, dans lequel la couche d'entrée comprend en outre un noeud de biais ayant une valeur de biais.

7. Procédé selon la revendication 1, dans lequel la couche cachée comprend en outre un noeud de biais ayant une valeur de biais.

8. Système de protection dans le coeur, destiné à synthétiser des distributions axiales de puissance sur la base de signaux de détecteurs de flux hors du coeur, mesurés par des détecteurs de flux de neutrons hors du coeur d'un réacteur nucléaire, au moyen du procédé selon la revendication 1.

FIG. 1

FIG. 2(a)

FIG. 2(b)

FIG. 3

S110 — Determine the numbers of nodes constituting input, hidden, and output layers of neural network circuit

S120 — Determine connection weights between respective nodes through repetitive learning of neural network circuit using core design data

S130 — Calculate core average powers for respective nodes based on ex-core flux detector signals during operation of nuclear reactor, using neural network circuit

S140 — Synthesize axial power distributions based on calculated core average powers for respective nodes

FIG. 4

FIG. 5

```
                    ┌──────────────┐
                    │    Start     │
                    └──────┬───────┘
                           ↓
        ┌──────────────────────────────────────┐
        │     Set initial connection weight     │
        └──────────────────┬───────────────────┘
                           ↓
        ┌──────────────────────────────────────┐
        │         Input learning data          │◄──────┐
        └──────────────────┬───────────────────┘       │
                           ↓                            │
        ┌──────────────────────────────────────┐       │
        │   Calculate values of hidden layer    │       │
        │  node and output layer node and an    │       │
        │                error                  │       │
        └──────────────────┬───────────────────┘       │
                           ↓                            │
        ┌──────────────────────────────────────┐       │
        │  Calculate change ratio of connection │       │
        │  weight between hidden and output     │       │
        │     layers with respect to error      │       │
        └──────────────────┬───────────────────┘       │
                           ↓                            │
        ┌──────────────────────────────────────┐       │
        │  Calculate change ratio of connection │       │
        │   weight between input and hidden     │       │
        │     layers with respect to error      │       │
        └──────────────────┬───────────────────┘       │
                           ↓                            │
        ┌──────────────────────────────────────┐       │
        │      Update connection weight         │       │
        └──────────────────┬───────────────────┘       │
                           ↓                            │
                ╱────────────────────╲        No        │
               ╱    Has calculation    ╲─────────────┐  │
               ╲   of all data been     ╱            │  │
                ╲     performed?       ╱             │  │
                 ╲──────────┬─────────╱              │  │
                           │ Yes                     │  │
                           ↓                         │  │
                ╱────────────────────╲        No     │  │
               ╱     Does error        ╲─────────────┘  │
               ╲      converge?        ╱                 │
                ╲──────────┬─────────╱──────────────────┘
                           │ Yes
                           ↓
                    ┌──────────────┐
                    │     End      │
                    └──────────────┘
```

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100009517

**Non-patent literature cited in the description**

- *Axial Power Distribution Calculation Using a Neural Network in the Nuclear Reactor Core,* 01 October 1997, 58-63, URL:http://www.osti.gov/etde/servlets/purl/324084-tqe2VL/webviewable/ 324084.pdf